# EUROPEAN PATENT APPLICATION

(11) **EP 3 869 036 A1**
(43) Date of publication of application: **25.08.2021**
(21) Application number: 20158992.6
(22) Date of filing: 24.02.2020
(51) Int. Cl.: F03D 80/50, F03D 80/60, B01D 46/00

(54) **AIR INTAKE UNIT FOR A WIND TURBINE AND WIND TURBINE**

(71) Applicant: Siemens Gamesa Renewable Energy A/S, 7330 Brande (DK)
(72) Inventor: Staugaard, Emil Klingenbjerg, 7400 Herning (DK)
(74) Representative: Aspacher, Karl-Georg

(57) **Abstract**

Air intake unit for a wind turbine (1), comprising one or more filters (10), a lifting arrangement (18) and a housing (13) with a bottom plate (9), wherein the lifting arrangement (18) comprises at least one lifting means (19) pivotably moveable relative to the housing (13), wherein at least one of the filters (10) is coupled to the lifting means (19), wherein the lifting means (19) is pivotable between a first position, in which the at least one filter (10) coupled to the lifting means is arranged on the bottom plate (9) of the housing, and a second position, in which the filter (10) is lifted from the bottom plate (9).

## Description

The invention relates to an air intake unit for a wind turbine. Furthermore, the invention relates to a wind turbine.

Normally, a wind turbine comprises a tower and a nacelle that is arranged on top of the tower. The nacelle bears the hub with the wind turbine blades and several of the components used for electric power generation like a rotating shaft, a generator and/or a transformer. For protection of these components, the nacelle comprises a nacelle cover which houses the components inside the nacelle. The components arranged in the nacelle of the wind turbine can generate heat during operation, so that a venting of the nacelle may be required. Therefore, the wind turbine can comprise one or more air intake units that convey air from the outside into the nacelle for cooling and/or venting of an interior of the nacelle or the components inside the nacelle, respectively.

An air intake unit may be for instance arranged in the front part of the nacelle, i.e. on the side of the nacelle directed to the hub of the wind turbine. An air intake unit can for instance convey air from an opening in a bottom portion of the nacelle protruding from the tower. To avoid an ingress of dirt, dust and/or moisture, the air intake unit may comprise one or more filters for filtering the air before it is released into the interior of the nacelle.

Due to an ongoing pollution of the filters upon operation of the wind turbine, a change of a filter may become necessary in the course of repair and/or maintenance procedures. However, due to the positioning of the air intake unit in a front portion of the nacelle, there may be only limited space available around the air intake unit inside the nacelle.

The limited space inside the nacelle makes in particular a change of a filter of the air intake cumbersome and difficult. Frequently, the air intake unit is accessible only from one side, so that for instance a plurality of filters arranged in a row have to be inserted for instance by sliding them one after another into and/or inside the air intake unit. However, this bears the problem that the filters, in particular a seal of the filter used for establishing an air-tight sealing, may be damaged during sliding. An avoidance of such sliding of the filters may require a disassembling of parts of the air intake unit increasing the amount of time needed for the filter replacement. Furthermore, due to the limited space inside the nacelle, a lifting of heavy filter unit and/or a storing of parts disassembled from the air intake unit, for example cover grids, fans or the like, may become difficult.

It is therefore an object of the invention to provide an air intake unit for a wind turbine which facilitates the exchange of a filter of the air intake unit.

According to the invention, this problem is solved by an air intake unit as previously described, wherein the air intake unit comprises one or more filters, a lifting arrangement and a housing with a bottom plate, wherein the lifting arrangement comprises at least one lifting means pivotably movable relative to the housing, wherein at least one of the filters is coupled to the lifting means, wherein the lifting means is pivotable between a first position, in which the at least one filter coupled to the lifting means is arranged on the bottom plate of the housing, and a second position, in which the filter is lifted from the bottom plate.

By coupling the at least one filter of the air intake unit to the lifting means, it is possible to exchange the filter without sliding the filter on the bottom plate of the housing. The at least one filter can be coupled to the lifting means in particular at a top side portion of the filter opposite to a seal arranged on a bottom portion of the filter. Thereby, the seal arranged on the bottom portion of the filter is not damaged when sliding the filter along the lifting means.

The filter can be lifted from a bottom of the housing by pivotably moving the lifting means from the first position to the second position. In the second position, the at least one filter may be decoupled from the lifting means and for instance a new filter may be coupled to the lifting means. Then, the lifting means can be pivotably moved from the second position back to the first position, so that the filter coupled to the lifting means is in contact with a bottom plate of the housing. This exhibits the advantage that a seal of the filter which seals the filter for instance on the bottom plate air-tight manner, is not prone to damages anymore during a removal or an insertion of the filter in the air intake unit.

By pivoting the lifting means between the first position, in which the at least one filter is coupled to the lifting means, and the second position, in which the filter is lifted from the bottom plate, the exchange of the filter is facilitated. Since the filter can be removed from the air intake unit or decoupled from the lifting means, respectively, when the lifting means is in the second position, a lifting of the filter from a bottom plate or another hard-to-reach position inside the housing can be circumvented. In particular, a manual lifting of the filter from the bottom plate may be avoided.

The lifting means may be arranged inside the housing above the bottom plate allowing a lifting of the filter for instance towards a top plate of the housing and/or an opening in a top plate of the housing, wherein the top plate is arranged opposite to the bottom plate. The lifting means may be coupled directly or indirectly to the housing. The lifting means is pivotably movable relative to the housing, in particular relative to the bottom plate. By pivoting the lifting means, the at least one filter coupled to the lifting means can be vertically displaced by pivoting the lifting means. In this context, the vertical direction applies to a mounted state of the air intake unit inside a wind turbine and is therefore identical to a vertical direction of the wind turbine.

In a preferred embodiment of the invention, the housing comprises a top plate with an opening, wherein the at least one filter coupled to the lifting means is arranged with a lateral displacement to the opening. In this context, a lateral direction means direction which is orthogonal to the vertical direction. The lateral direction may run for instance in the plane of the bottom plate. The opening in the top plate of the housing of the air intake unit may be used for removing the filter from the air intake unit or the interior of the housing, respectively. Therefore, the size of the opening is preferably at least the size of a filter of the air intake unit, so that the filters can be lifted through the opening for removing them from the air intake unit.

By coupling at least one filter arranged with a lateral displacement to the opening to the lifting means, a replacement of filters that are not arranged directly underneath the opening is facilitated. The filter coupled to the lifting means can be lifted from the bottom plate by pivoting the lifting means from a first position, in which the filter is arranged on the bottom plate of the housing, to the second position, in which the filter is lifted from the bottom plate. When the lifting means is in the second position, the filter can be decoupled from the lifting means and then removed through the opening, so that a sliding or a comparable movement that bears the risk of damaging the filter can be avoided advantageously. The top plate may comprise a hatch pivotably attached next to the opening, so that the opening may be closed during normal operation of the air intake unit. Preferably, the air intake unit comprises at least one additional filter, which is arranged on the bottom plate of the housing opposite to the opening. The at least one additional filter may not be coupled to the lifting means since the additional filter can be removed from the air intake unit only by a vertical movement, for instance by lifting it through the opening, so that a sliding of the filter and/or another type of lateral movement is not required.

In a preferred embodiment of the invention, the at least one filter is slidably coupled to the lifting means. By slidably coupling the at least one filter to the lifting means, the at least one filter can be slid along the lifting means facilitating a movement of the filter in lateral direction, in particular when the lifting means is in the second position. The slidable coupling to the lifting means allows in particular to couple more than one filter to the lifting means. This can be done for instance when the lifting means is in a second position by coupling the filters successively to the lifting means and sliding them in lateral direction along the lifting means. When all filters have been coupled to the lifting means, the lifting means can be pivoted from the second position to the first position to bring the filters in contact with the bottom plate of the housing. This allows in particular to exchange a plurality of filters arranged in a row without the need for sliding them along the bottom plate.

Preferably, the lifting means comprises at lest one lifting rod, wherein the lifting rod is arranged parallel or essentially parallel to the bottom plate in the first position of the lifting means, wherein the lifting rod engages into at least one opening of the at least one filter for coupling the at least one filter to the lifting means. The lifting means may comprise more than one lifting rod, wherein the plurality of lifting rods are preferably arranged parallel or essentially parallel to each other in a plane that is parallel and vertically spaced from the bottom plate of the housing. Two or more lifting rods can form for instance a lifting fork, wherein each lifting rod of the lifting force engages into at least one opening of the at least one filter.

The at least one opening of the at least one filter may be for instance arranged in a top side portion of the filter. The opening may be for instance a handle used for manual lifting of the filter. In particular, the filter may comprise at least one pair of handles, wherein the handles of each pair are arranged on opposing side portions of the filter. Each handle exhibits an opening through which the at least one lifting rod of the lifting means may be guided for coupling the filter to the lifting means. By the at least one lifting rod engaging into at least one opening of the at least one filter, a slidable coupling of the filter to the lifting arrangement may be achieved. As previously described, it is possible that the lifting means comprises more than one lifting rod. In particular, each lifting rod of the lifting arrangement may engage into at least one different opening of the at least one filter, in particular each lifting rod of the lifting means may be engaged into a different pair of handles of the at least one filter.

Preferably, the lifting arrangement comprises a releasable locking means that locks the lifting means in the first position and/or the lifting arrangement comprises a holding unit for holding the lifting means in the second position. When the lifting means is moved in the first position, the locking means may be locked to fixate the lifting means in the first position to prevent in particular an unintended movement of the lifting means from the first position into the second position. The locking means may be for instance a latch or a bolt releasably engaging into the lifting means for locking it in the first position. It is also possible that the locking means is a protrusion of a sidewall of the housing and/or a beam of the lifting arrangement under which the locking means can latch or snap in for locking it in the first position.

To facilitate a decoupling of the filter when the lifting means is in the second position, the air intake unit may comprise a holding unit for holding the lifting means in the second position. Depending on the shape and the size of the lifting means, the holding unit can comprise for instance one or more slings, wherein the one or more slings may be attached for instance on a top plate of the housing and allowing an insertion of the lifting means when it is in the second position. This has the advantage that a manual holding of lifting means in the second position is not required facilitating in particular a coupling or decoupling of the at least one filter to the lifting means and/or a lateral displacement of a plurality of filters coupled to the lifting means, for instance by sliding them along the lifting means.

In a preferred embodiment of the invention, the lifting means comprises at least one supporting rod with a first end portion and a second end portion, wherein the first end portion of the at least one rod is at least partly retractable and the second end portion is coupled to the housing via at least one hinge. The coupling of the second end portion to the housing by at least one hinge allows a pivoting movement of the lifting means between a first position, in which the at least one supporting rod is aligned parallel or essentially parallel to the bottom plate of the housing, and a second position, in which especially the first end portion of the at least one rod is vertically displaced from the bottom plate and for instance approached to an opening in the top plate of the housing.

The at least one supporting rod can be for instance a telescope rod allowing to retract the first end portion of the rod at least partly into an intermediate portion and/or the second end portion of the supporting rod. Retracting a first portion of the at least one supporting rod of the lifting means allows to shorten the length of the lifting means, especially when the lifting means is pivoted into the second position. The shortening of the rod of the lifting means enables for instance the exchange of a filter that is not coupled to the lifting means and arranged underneath the first end portion of the supporting rod in the extracted state. The retraction of the first portion makes the filter not coupled to the lifting means accessible so that they can be for instance removed through an opening in the top plate of the housing. The at least one supporting rod may comprise a securing means that lock the first end in its extracted and/or retracted state. The securing means may comprise at least one screw, for instance a finger screw, a wing screw or the like. The supporting rod may also be referred to as pressure rod.

A lifting means comprising at least one supporting rod, in particular at least one telescope rod, and a lifting means comprising at least one lifting rod may provide that the at least one lifting rod is arranged parallel or essentially parallel to the supporting rod and opposing to the second end portion and/or an intermediate portion of the supporting rod so that it does not extend over the length of the supporting rod when the first end portion is retracted into the intermediate portion and/or the second end portion of the rod. The lifting rod may be arranged parallel or essentially parallel to the at least one supporting rod and may be arranged for instance underneath the at least one supporting rod of the lifting arrangement with a vertical distance that allows the coupling of the at least one filter to the lifting rod. Depending on the size of the at least one filter, the vertical distance may be for instance between 0.5 cm and 2.5 cm, in particular 1.5 cm.

Preferably, the lifting arrangement comprises a pressure arrangement applying a force to the at least one filter coupled to the lifting means, wherein the force is directed at least partly to the bottom plate of the housing when the lifting means is in the first position. The force created by the pressure arrangement may act for instance directly or indirectly on the lifting means to which the at least one filter is coupled. By the pressure arrangement, the filter is pressed against the bottom plate when the lifting means is in its first position enabling an air-tight seal of the filter to the bottom plate of the housing. In particular, the force created by the pressure arrangement may act for instance on a first end portion and/or on a second end portion of the at least one supporting rod of the lifting means. The supporting rod of the lifting means may be in direct contact to the at least one filter coupled to the lifting means so that the pressure acting on the at least one supporting rod of the lifting means is transferred to the at least one filter and presses it against the bottom plate of the housing in the first position of the lifting means. By using a pressure arrangement, a constant and defined pressure on the filters can be created. An unintended overtensioning of the filters can be avoided advantageously.

It is possible that the first end portion of the rod may be decoupled from the pressure arrangement by retracting it. This allows for instance a retraction of the first end of the supporting rod of the lifting means when the lifting means in the first position to decouple the first end portion of the support rod from the pressure arrangement. The first end portion can be for instance in direct contact with the pressure arrangement and/or in direct contact with a locking means on which the force created by the pressure arrangement acts. In the first position, the first end portion of the supporting rod can be also in direct contact to one or more additional filters not coupled to the lifting means allowing a transfer of the force or pressure, respectively, from the pressure arrangement to the one or more additional filters.

A method for replacement of at least one filter in an air intake unit according to the invention may start by retracting the first end portion of the rod, so that the lifting arrangement is partly decoupled from the pressure arrangement and/or a locking means of the lifting arrangement allowing for pivoting of the lifting means from the first position into the second position. In the second position, the at least one filter coupled to the lifting means can be replaced. Also, one or more additional filters not coupled to the lifting means may be replaced. After replacing the filters, the lifting means can be brought back into the first position. Then, the first end portion of the at least one rod of the lifting means can be extracted again for coupling it to the pressure arrangement and/or for engaging it to a locking means.

Preferably, the pressure arrangement is attached to the housing, wherein the lifting means is pivotably coupled to the pressure arrangement via a hinge. In particular, the second end portion of at least one supporting rod of the lifting means may be coupled to the pressure arrangement via a hinge to allow in particular a releasable coupling of the first end portion by retracting it, or extracting it, respectively, as previously described.

In a preferred embodiment of the invention, the pressure arrangement comprises a plurality of springs acting on the lifting means. In particular, there may be a pair of springs per supporting rod of the lifting means, wherein a first spring of the pair is acting on the first end portion in its extracted stage and the second spring is acting on the second end portion of the supporting rod.

Preferably, the pressure arrangement comprises at least one releasing unit for at least partly releasing the force created by the pressure arrangement, in particular at least one handle for compressing at least a part of the or a plurality of springs of the pressure arrangement. In particular, the releasing unit can comprise one or more handles allowing a manual compression of the part of the springs of the pressure arrangement that act on a first end portion of at least one supporting rod of the lifting means. By compressing these springs, a retraction of the first end portion of the at least one supporting rod is facilitated since the pressure created by the pressure arrangement is removed from the first end portion, in particular when the lifting means is in the first position.

In a preferred embodiment of the invention, the housing comprises at least one sidewall exhibiting at least one protrusion, wherein the at least one protrusion abuts the filter or at least one of the filters coupled to the lifting means when the lifting means is in the second position. By providing a sidewall exhibiting at least one protrusion that abuts the filter when the lifting means is in the second position, an end stop is provided facilitating for instance a sliding of the at least one filter on the lifting means. Due to the protrusion provided in the sidewall of the housing, the at least one filter coupled to the lifting means can be slid on the lifting means until it abuts the protrusion on the sidewall. This ensures a correct positioning of the at least one filter coupled to the lifting means when the lifting means is pivoted into the first position so that the at least one filter coupled to the lifting means is in direct contact to the bottom plate of the housing. The at least one protrusion of the sidewall may additionally also abut the filter when the lifting means is in the first position further facilitating a correct and precise positioning of the at least one filter in the air intake unit.

Preferably, the housing comprises at least one sidewall, in particular at least one tilted or partly tilted sidewall, which abuts the at least one filter coupled to the lifting means when the lifting means is in the first position. By providing at least one sidewall of the housing that abuts the at least one filter coupled to the lifting means when the lifting means is in its first position a correct and precise positioning of the at least one filter in the air intake unit is achieved. The tilted or partly tilted sidewall abuts the one or more filters coupled to the lifting means when they are in direct contact to the bottom plate of the housing to ensure a correct positioning of all filters coupled to the lifting means when they are in direct contact with the bottom plate. In particular by providing a tilted or partly tilted sidewall, the at least one filter coupled to the lifting means can be guided towards its correct position on the bottom plate when the lifting means is pivoted from the second position to the first position. A small displacement in the lateral direction orthogonal or essentially orthogonal to the tilted sidewall can be corrected advantageously using a tilted or partly tilted sidewall since the at least one filter is guided by the tilted or partly tilted sidewall.

Preferably, the bottom plate and/or the or a top plate of the housing comprise at least one grid portion and/or the housing comprises at least one fan unit coupled to the bottom plate and/or the or a top plate of the housing. By providing at least one grid portion in the bottom plate of the housing and/or in the top plate of the housing, an airstream flowing for instance through the bottom plate and the at least one filter arranged on the bottom plate is possible. The air filtered by the at least one filter can then be released through at least one grid portion of a top plate of the housing. By using at least one fan unit placed on the top plate of the housing, the air can be conveyed from the bottom plate to the top plate. The at least one fan unit may be coupled to the bottom plate and/or the top plate of the housing and it may be arranged in particular on a grid portion of the bottom plate and/or the top plate, respectively. A fans unit arranged on the top plate of the housing may be placed in the centre of the top plate, for instance next to an opening in the top plate. It is also possible that one or more fan units coupled to the top plate are arranged eccentrically, i.e. with a lateral displacement from a centre of the top plate. A tilted sidewall, or a tilted portion of a partly tilted sidewall, respectively, may be tilted for instance between 1° and 10°, in particular between 3° and 5°, to the vertical direction.

A wind turbine according to the invention comprises at least one air intake unit according to the invention. In particular, the wind turbine may comprise a nacelle, wherein the at least one air intake unit is arranged at the nacelle of the wind turbine. Preferably, the at least one air intake unit is arranged in a front portion of the nacelle, in particular underneath a hub of the wind turbine. The bottom plate of the air intake unit can be for instance arranged on a bottom portion of the nacelle, so that air from underneath the nacelle can be conveyed into the nacelle using the at least one air intake unit.

For a wind turbine according to the invention, the details and advantages of an air intake unit according to the invention apply correspondingly.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: an embodiment of a wind turbine according to the invention,
- Fig. 2: a detailed view on the embodiment of a wind turbine according to the invention,
- Fig. 3: an example of an air intake unit according to the prior art,
- Fig. 4: a side view of an embodiment of an air intake unit according to the invention, wherein the lifting means is in the first position,
- Fig. 5: a front view of the embodiment of an air intake unit according to the invention,
- Fig. 6: a back view of the embodiment of an air intake unit according to the invention, and
- Fig. 7: a side view of an embodiment of an air intake unit according to the invention, wherein the lifting means is in the second position.

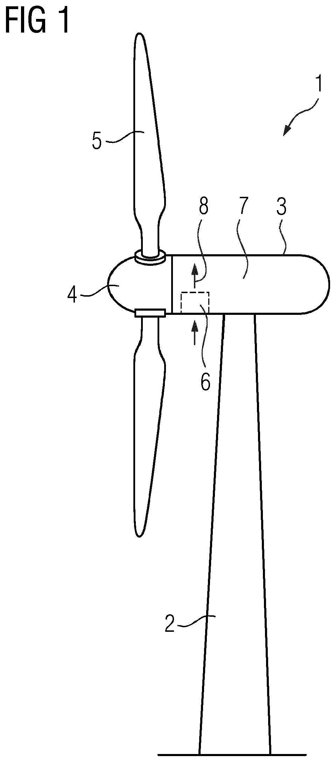

In fig. 1, a wind turbine 1 according to the invention is shown. The wind turbine comprises a tower 2 and a nacelle 3 which is arranged on top of the tower 2. On a front side of the nacelle 3, a hub 4 of the wind turbine 1 is arranged carrying a plurality of wind turbine blades 5. In the front portion of the nacelle 3, an air intake unit 6 according to the invention is arranged. The air intake unit 6 is used to convey air from outside of the nacelle 3 into an interior 7 of the nacelle 3. The movement of the air is schematically depicted by the arrows 8.

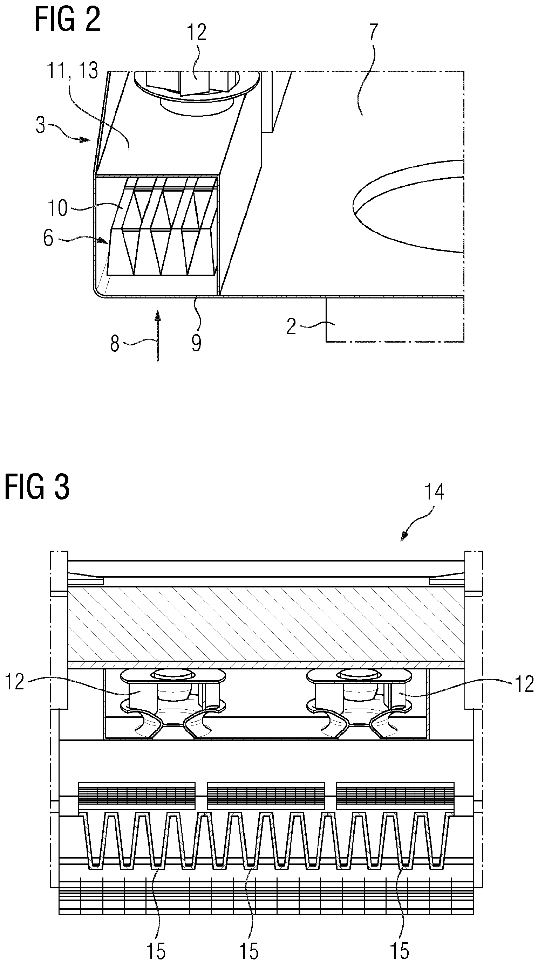

In fig. 2, a detail of the wind turbine 1 is shown depicting the front portion of the nacelle 3 and the air intake unit 6. A cover covering the nacelle 3 are not shown in fig. 2, so that the interior 7 of the nacelle 3 and the components of the air intake unit 6 are visible. The air intake unit 6 comprises a bottom plate 9 and at least one filter 10 for filtering the air which is conveyed using the air intake unit 6 from the outside of the nacelle 3 to the interior 7 of the nacelle 3. The filter 10 can be placed for instance on a grid portion of the bottom plate 9. On a top plate 11 of the air intake unit 6, a fan unit 12 is arranged for establishing an air flow from the outside of the wind turbine 1 to the interior 7 of the nacelle 3. The bottom plate 9 and the top plate 11 form part of a housing 13 of the air intake unit 6. Due to the limited space in the interior 7 of the nacelle 3, an exchange of the at least one filter 10 of the air intake unit 6 has to take place a limited space. Such a replacement has shown to be tedious and difficult using an air intake unit according to the prior art.

An air intake unit 14 according to the prior art is shown in fig. 3. The air intake unit 14 comprises three filters 15 arranged on a bottom grid 16 of the air intake unit 14. Furthermore, the air intake unit 14 comprises two fan units 12 arranged above the filters 15. For replacement of one of the filters 15, both a top grid 17 and at least one of the fan units 12 have to be removed and stored inside the interior 7 of the nacelle 3 for given access to the right or the left of the filters 15, respectively. For exchanging all the filters 15, first the right filter, or the left filter, respectively, has to be removed in a vertical direction. Then, the two remaining filters have to be moved in a lateral direction over the bottom grid 16 before they can be lifted through the opening remaining at the position of the removed fan unit 12 Correspondingly, new filters and/or clean filters have to be inserted in the air intake unit 14 in reverse order. However, the sliding of the filters 15 on the bottom grid 16 bears the risk of damaging the filters during movement.

Alternatively, for avoiding the movement of the filters in a lateral direction on the bottom grid 16, all fan units 12 have to be removed enabling a removal of the individual filters 15 by only a vertical displacement. Therefore, removing of all filter units 15 is tedious and requires a comparable large space in the interior 7 of the nacelle 3 for storing the detached components. However, these problems can be solved using an air intake unit 6 according to the invention.

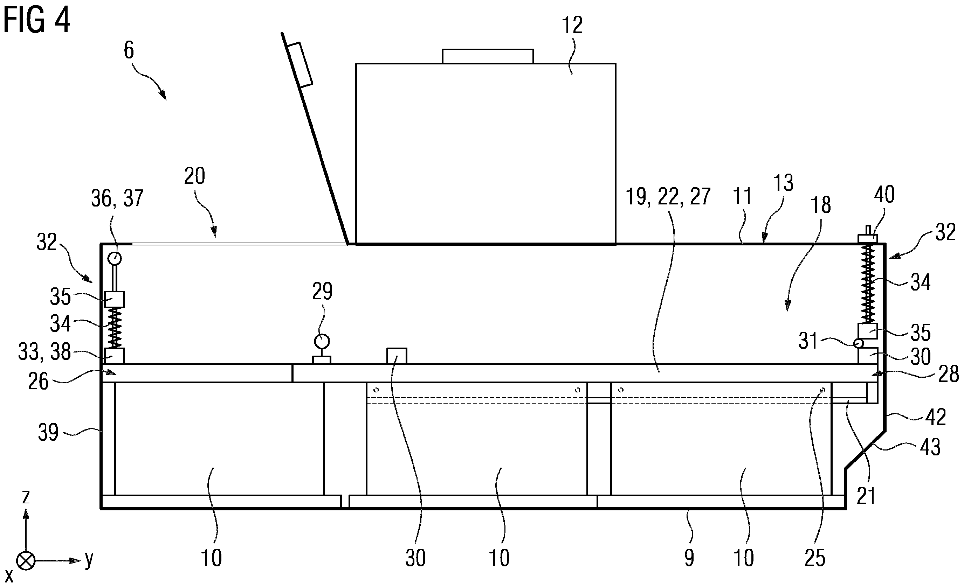

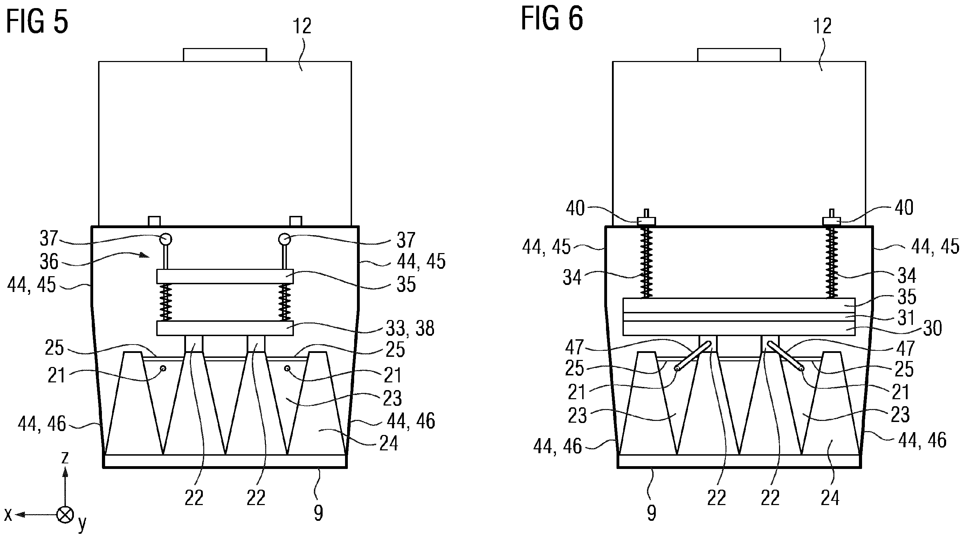

In fig. 4, a side view of an air intake unit 6 according to the invention is shown. The corresponding front view is shown in fig. 5 and the corresponding back view is depicted in fig. 6. The air intake unit 6 comprises a lifting arrangement 18 with a lifting means 19. The lifting means 19 is pivotably movable relative to the housing 13 of the air intake unit 6, in particular movable relative to the bottom plate 9 of the housing 13.

The top plate 11 of the housing 13 comprises an opening 20, through which the filter units 10 of the air intake unit 6 can be removed. In this embodiment, the air intake unit 6 comprises three filter units 10. The filter unit 10 in the right position and the filter unit 10 in the middle position are both coupled to the lifting means 19 of the lifting arrangement 18. The left filter unit 10 is not coupled to the lifting means 19. The lifting means 19 comprises two lifting rods 21 and two supporting rods 22, which are aligned parallel or essentially parallel. The lifting rods 21 are positioned in a vertical distance underneath the supporting rods 22, wherein the back ends of the lifting rods 21 may each be attached to a back end of a supporting rod 22 by a connector element 47 forming a lifting fork. The positioning of the lifting rods 21 and the supporting rods 22 can be seen in particular on the front view depicted in fig. 5 and the back view depicted in fig. 6.

Each of the lifting rods 22 engages in one or more openings 23 of the two filters 10 coupled to the lifting means 19. The openings 23 are each created between a filtering portion 24 of the filter units 10 and a handle 25 of the filter. Each of the filters 10 may comprise one or more pairs of handles 25, wherein each handle 25 of a pair of handles 25 is arranged on a opposing side of the filter 10. The lifting rods 21 engaged in the openings 23 of the filters 10 allow a slidable coupling of the filters 10 to the lifting means 19, or the lifting rod 24, respectively. The vertical distance between the lifting rods 21 and the supporting rods 22 can be for instance 15 mm, so that the filter units 10 can be slid on the lifting rods 21 without overlapping, in particular without overlapping of their bottom portions.

Each of the supporting rods 22 comprises a first end portion 26, an intermediate portion 27 and a second end portion 28. As described later in detail, the second end portion 28 is coupled via a hinge 31 to the housing 13 of the air intake unit 6. Each of the supporting rods 22 is a telescope rod allowing to retract the first end portion 26 into the intermediate portion 27 of the supporting rod 22. For fixating the first end portion 26 of the supporting rod 22 in either its extracted or retracted position, a screw 29, for instance a wing-screw or a finger-screw, is provided. The two supporting rods 22 are connected by two cross beams 30, forming a frame structure. The first end portions 26 of the supporting rods 22 can have for instance a square profile with a height of 25 mm, a thickness of 25 mm and a wall thickness of 2 mm. The intermediate portion 27 and the second end portion 28 can be formed by a rod with a square profile having a height of 30 mm and a thickness of 30 mm and a wall thickness of 2 mm. Also the cross beams 30 may have a square profile with a height of 30 mm, a thickness of 30 mm and a wall thickness of 2 mm.

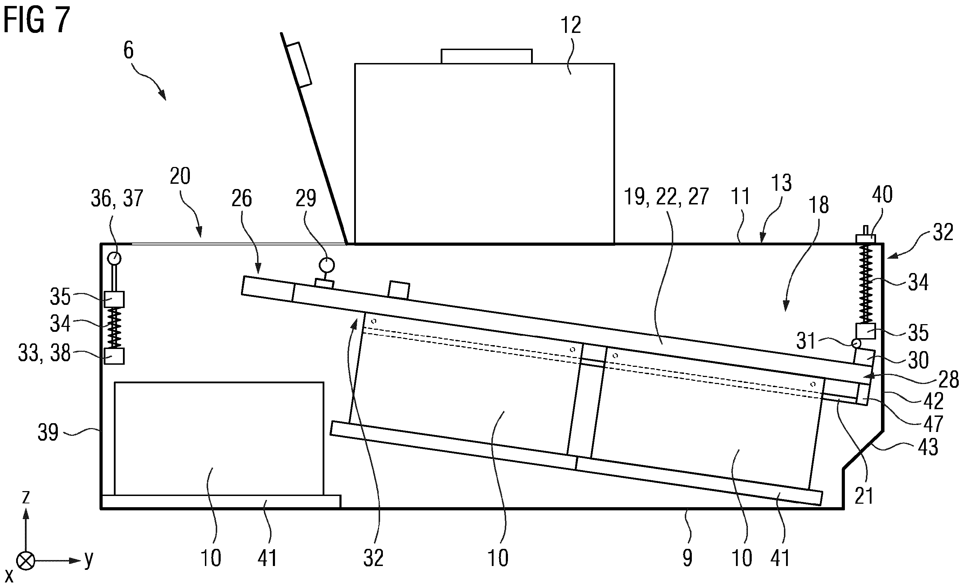

In fig. 4, the lifting means 19 is depicted in its first position, in which the filters 10 coupled to the lifting means 19 are arranged on the bottom plate 9 of the housing 13. By opening the screws 29, the first portions 26 of the supporting rods 22 can be retracted into the intermediate portion 27 of the respective supporting rod 22. Then, the lifting means 19 can be pivoted in its second position, as it is depicted in fig. 7. In the second position, the filters 10 coupled to the lifting means 19 are lifted from the bottom plate 9 due to the vertical displacement of the pivoted lifting means 19. The left filter 10, which is placed underneath the opening 20, is not coupled to the lifting means 19 and therefore remains on the bottom plate 9. The left filter 10 can be removed by lifting it in vertical direction through the opening 20. The lifting arrangement 18 may comprise a holding unit for holding the lifting means 19 in the second position. The holding unit may comprise for instance one or more slings attached to the top plate 11 of the housing 13, wherein the lifting means can be engaged in the slings for holding it in the second position.

In the second position, the filters 10 coupled to the lifting means 19 can be decoupled by sliding them along the lifting rods 21 towards the opening 20. After sliding over the retracted first end portions 26 of the supporting rod 22, first the middle filter 10 and then the right filter 10 can be removed through the opening 22. Vice versa, a new or a cleaned filter 10 can first be slid on the lifting rod 21 towards the second end 28 of the supporting rod. Then the middle filter 10 can be slid on the lifting rod 21 until it abuts the right filter 10. Afterwards, the left filter can be lifted through the opening 20 and placed on the bottom plate 9. Then same principle can be applied to air intake units 6 comprising more than three filters 10.

Then, the lifting means can be pivoted back to its first position and the first end portions 26 of the supporting rods 22 can be extracted and secured by tightening the screw 29 of each supporting rod 22. In this manner, the filters 10 can be exchanged without sliding them over the bottom plate 9 of the housing. This reduces for instance the risk of damaging a seal 41 of the filters used to seal the filters against the bottom plate 9.

The lifting arrangement 18 further comprises a pressure arrangement 32 and a locking means 33. The pressure arrangement 32 comprises four springs 34, two cross beams 35 and a releasing unit 36 comprising two handles 37. The locking means 33 comprises a beam 38. The cross beams 35 and/or the beam 38 may exhibit a rectangular profile having a height of 30 mm and a thickness of 30 mm and a wall thickness of 2 mm.

On the front side of the housing 13, which is depicted in fig. 5 and which corresponds to the left side in fig. 4, two of the springs 34 are arranged between the beam 38 of the locking means 33 and one of the beams 35 of the pressure arrangement 32, wherein the beam 35 is attached to a sidewall 39 of the housing. The beam 38 of the locking means 33 can be lifted by compressing the two springs 34 by pulling one or both of the handles 37 of the releasing unit 36. In the first position of the lifting means 19, when the first end portions 26 of the supporting rods 22 are engaged under the beam 38 of the locking means 33, the springs 34 of the pressure arrangement 32 create a force directed to the bottom plate 9 of the housing 13 pressing the filters 10 on the bottom plate 9.

By the locking means 33, the first end portions 26 of the supporting rods 22 can be locked in the first position of the lifting means 19, in which the two filters 10 coupled with the lifting means 19 are arranged on the bottom plate 9 of the housing, to avoid an unintended pivoting of the lifting means 19 into the second position. By releasing the locking means 33 as previously described, the first end portions 26 of the supporting rods 22 can be retracted into the intermediate portion 27 of the pressure beams 22 after unlocking the screws 29 for enabling a pivoting of the lifting means 19 in the second position.

Referring to the back side depicted in fig. 6, at the second end portion 30 of the supporting rods 22, the lifting means 19 is coupled via the hinge 31 to one of the beams 35 of the pressure arrangement 32 enabling a pivoting of the pressure means 19 from the first position into the second position. The hinge 31 may be for instance a piano hinge. The beam 35 coupled to the hinge 31 is coupled by two of the springs 34 to the top plate 11 of the housing 13, wherein the two springs 34 can be attached for instance using nuts 40.

For creating a pressure acting on the filters 10, two springs 34 are acting via the beam 38 on the first end portions 26 of the pressure beams 22. On the back side, two springs 34 are acting via the cross beam 35 of the pressure arrangement 32, the hinge 31 and the cross beam 30 on the second end portions 28 of the supporting rods 22. The force created by the springs 34 acting on the supporting rods 22 is transferred to the filters 10, for instance by an abutting of the filtering portions 24, or a contacting point of the filtering portions 24, respectively, of each filter 10 to the supporting rods 22. The force results in a pressure pressing the filters 10 against the bottom plate 9, so that for instance the seal 41 of the filters 10 can establish an air-tight seal to the bottom plate 9.

The height and/or the thickness of the first end portion 26 and or the intermediate portion 27 and/or second end portion 28 of the supporting rods 22 can be chosen to match the width of a contact point of the filters 10, for instance the width of a fin of the filtering portion 24 of the filters 10. For the left filter 10, which is abutting the first end portions 26 of the supporting rods 22, a height and/or width difference resulting from the different diameters of the first end portions 26 and of the intermediate portion 27 or the second end portion 28, respectively, can be compensated using a compensation means, for instance one or more washers or the like.

As it can be seen in figs. 4 and 7, the housing 13 of the air intake unit 6 further comprises a sidewall 42 exhibiting a protrusion 43. This protrusion abuts the first filter 10, which is slid on the lifting rods 22, for instance by abutting the seal 41 of the right filter 10 when the lifting means 19 is in the second position as shown in fig. 7. This facilitates a correct positioning of the filters 10 in the air intake unit 6 since the occurrence of an unintended displacement of the filters 10 is avoided.

As it is depicted in figs. 5 and 6, the housing 13 may comprise two partly tilted side walls 44, which exhibit each a straight portion 45 and a tilted portion 46. The tilted portion 46 can be tilted inwards to an interior of the housing 13, for instance between 3° and 5°. The tilted portions 46 of the partly tilted side walls 44 abut the filters 10 when the lifting means 19 is in the first position, or when the filter 10 is arranged on the bottom plate 9, respectively. This further facilitates a correct placement of the filters 10 on the bottom plate 9 since the filters 10 coupled to the lifting means 19 as well as a filter 10 lifted through the opening 20 to a position vertically underneath the opening 20 are guided into their correct position by the tilted portions 46 of the side walls 44. This provides a self-centering function and facilitates for instance a positioning of the filters 10 each on a grid portion of the bottom plate 9 to enable both an air-tight seal to the bottom plate 9 and an filtered air flow through the air intake unit 6, especially through the bottom plate 9, the filters 10, one or more grid portions in the top plate 11 and/or the fan 12.

Although the present invention has been described in detail with reference to the preferred embodiment, the present invention is not limited by the disclosed examples from which the skilled person is able to derive other variations without departing from the scope of the invention.

## Claims

1. Air intake unit for a wind turbine (1), comprising one or more filters (10), a lifting arrangement (18) and a housing (13) with a bottom plate (9), wherein the lifting arrangement (18) comprises at least one lifting means (19) pivotably moveable relative to the housing (13), wherein at least one of the filters (10) is coupled to the lifting means (19), wherein the lifting means (19) is pivotable between a first position, in which the at least one filter (10) coupled to the lifting means is arranged on the bottom plate (9) of the housing, and a second position, in which the filter (10) is lifted from the bottom plate (9).

2. Air intake unit according to claim 1, **characterised in that** the housing (13) comprises a top plate (11) with an opening (20), wherein the at least one filter (10) coupled to the lifting means (19) is arranged with a lateral displacement to the opening (20).

3. Air intake unit according to claim 2, **characterised in that** the air intake unit (6) comprises at least one additional filter (10), which is arranged on the bottom plate (9) of the housing (13) opposite to the opening (20) .

4. Air intake unit according to one of the preceding claims, **characterised in that** the at least one filter (10) is slidably coupled to the lifting means (19).

5. Air intake unit according to one of the preceding claims, **characterised in that** the lifting means (19) comprises at least one lifting rod (21), wherein the lifting rod (21) is arranged parallel or essentially parallel to the bottom plate (9) in the first position of the lifting means, wherein the lifting rod (21) engages into at least one opening (23) of the at least one filter (10) for coupling the at least one filter (10) to the lifting means (19).

6. Air intake unit according to one of the preceding claims, **characterised in that** the lifting arrangement (18) comprises a releasable locking means (33) that locks the lifting means in the first position and/or that the lifting arrangement (18) comprises a holding unit for holding the lifting means (19) in the second position.

7. Air intake unit according to one of the preceding claims, **characterised in that** the lifting means comprises at least one supporting rod (22) with a first end portion (26) and a second end portion (28), wherein the first end portion (26) of the at least one rod is at least partly retractable and the second end portion (28) is coupled to the housing (13) via at least one hinge (31) .

8. Air intake unit according to one of the preceding claims, **characterised in that** the lifting arrangement (18) comprises a pressure arrangement (32) applying a force to the lifting means (19), wherein the force is directed at least partly to the bottom plate (9) of the housing (13) when the lifting means (19) is in the first position.

9. Air intake unit according to claim 8, **characterised in that** the pressure arrangement (18) is attached to the housing (13), wherein the lifting means (19) is pivotably coupled to the pressure arrangement (18) via a hinge (31).

10. Air intake unit according to claim 8 or 9, **characterised in that** the pressure arrangement (32) comprises a plurality of springs (34) acting on the lifting means (19).

11. Air intake unit according to claim 8 to 10, **characterised in that** the pressure arrangement (32) comprises at least one releasing unit (37) for at least partly releasing the force created by the pressure arrangement (32), in particular at least one handle (38) for compressing at least a part of the or a plurality of springs (34) of the pressure arrangement (32).

12. Air intake unit according to one of the preceding claims, **characterised in that** the housing (13) comprises at least one sidewall (42) exhibiting at least one protrusion (43), wherein the at least one protrusion (43) abuts the filter (10) or at least one of the filters (10) coupled to the lifting means (19) when the lifting means (19) is in the second position.

13. Air intake unit according to one of the preceding claims, **characterised in that** the housing (13) comprises at least one sidewall, in particular at least one tilted or partly tilted sidewall (44), which abuts the at least one filter (10) coupled to the lifting means (19) when the lifting means (19) is in the first position.

14. Air intake unit according to one of the preceding claims, **characterised in that** the bottom plate (9) and/or the or a top plate (11) of the housing (13) comprise at least one grid portion and/or that the housing (13) comprises at least one fan unit (12) coupled to the bottom plate (9) and/or the or a top plate (11) of the housing (13).

15. Wind turbine comprising at least one air intake unit (6) according to one of the preceding claims.
